# EUROPEAN PATENT SPECIFICATION

(11) **EP 2 915 706 B1**
(45) Date of publication and mention of the grant of the patent: **09.08.2017**
(21) Application number: 13851185.2
(22) Date of filing: 08.10.2013
(51) Int. Cl.: B60R 25/102, B60R 25/40, G08G 1/123, H04W 4/02, H04W 64/00

(54) **VEHICLE POSITION INFORMATION NOTIFICATION APPARATUS**
VORRICHTUNG ZUR MELDUNG VON FAHRZEUGPOSITIONSINFORMATIONEN
APPAREIL DE NOTIFICATION D'INFORMATIONS SUR LA POSITION D'UN VÉHICULE

(30) Priority: 01.11.2012 JP 2012241826
(43) Date of publication of application: 09.09.2015
(73) Proprietor: DENSO CORPORATION, Aichi-pref., 448-8661 (JP)
(72) Inventor: SUZAKI, Mitsuteru, Kariya-city, Aichi-pref., 448-8661 (JP)
(74) Representative: Winter, Brandl, Fürniss, Hübner, Röss, Kaiser, Polte - Partnerschaft mbB
(86) International application number: PCT/JP2013/005967
(87) International publication number: WO 2014/068852

(56) References cited:
- EP-A2- 0 635 963
- EP-A2- 2 284 052
- WO-A1-2011/110891
- WO-A1-2012/142657
- WO-A1-2012/176299
- JP-A- 2001 236 597
- JP-A- 2002 173 064
- JP-A- 2002 216 270
- JP-A- 2013 061 859
- JP-U- 3 071 509

## Description

### TECHNICAL FIELD

The present disclosure relates to a vehicle position information notification apparatus that detects a current position of a vehicle by a position measuring function, and transmits a position information detected, based on identification information of a communication card installed thereto, via a wireless communication.

### BACKGROUND ART

In a vehicle position information notification apparatus, which is equipped to four-wheeled vehicles or motorcycles, a circuit board having a communication device, a GPS (Global Positioning System) device and the like thereon, a battery cell as a backup power supply, a SIM card and other components are accommodated in a case, and the case is covered with a case cover. The vehicle position information notification apparatus is supplied with electric power of a vehicle in the state of being equipped to the vehicle.

When the vehicle is stolen, the vehicle position information notification apparatus is driven by the backup power supply and transmits a vehicle position information positioned by a remote control or the like, thereby to enable the vehicle to be tracked and found.

### SUMMARY OF INVENTION

A vehicle position information notification apparatus equipped to a motorcycle (see JP2001236597A) is likely to be easily stolen. To address this issue, it has been considered a vehicle position information notification apparatus having a function of determining that an abnormality has occurred when an electrical connection of either a vehicle power supply or an internal battery power supply is disconnected and notifying a position information to a control center via a wireless communication. In this vehicle position information notification apparatus, the vehicle power supply is disconnected at the same time as a theft steals the vehicle position information notification apparatus from a body of a motorcycle. The vehicle position information notification apparatus detects the disconnection of the vehicle power supply and transmits the position information measured, for example, to a control center, via the wireless communication. Moreover, in a period where the vehicle position information notification apparatus can be supplied with electric power from the internal battery power supply, the vehicle position information notification apparatus transmits the position information measured each time via the wireless communication at a predetermined time interval, thereby to enable the theft to be tracked.

However, if a theft who is knowledgeable about an internal structure of the apparatus opens the cover of the case in the state where both of the vehicle power supply and the internal battery power supply are in the connected states, and removes only the SIM card in this state, since both of the power supplies are in the connected states, an emergency notification described above is not made. In this state, if the theft steals the vehicle or the vehicle position notification apparatus by separating it from the motorcycle, even when the vehicle power supply of the vehicle position information notification apparatus is disconnected, since the SIM card has been already removed, the identification information cannot be obtained and thus the communication cannot be conducted. Therefore, the emergency notification described above cannot be made.

Further, WO2012142657 A1 discloses an independent and automatic alert device, system and method provides an alert transmission to a remote location in the event of an incident occurring to an object such as a person or vehicle. WO2011110891 A1 discloses an autonomous tracking device for a vehicle, comprising a support member having a front face, a GPS module having a GPS antenna, a transceiver adapted to wirelessly send tracking data with vehicle locations data to a remote unit, a rechargeable battery, a solar photocell array and sticking means.

The present disclosure is made in view of the foregoing issues described above, and it is an object of the present disclosure to provide a vehicle position information notification apparatus with a structure in which a SIM card is removed only after connection of an internal battery power supply is disconnected.

According to an aspect of the present disclosure, a vehicle position information notification apparatus notifies a position information measured via a wireless communication when electrical connection of either a vehicle power supply or an internal battery power supply is disconnected. The vehicle position information notification apparatus includes a case having an opening portion, a cover covering the opening portion of the case, a circuit board disposed in the case, and an internal battery power supply part constituting the internal battery power supply. The circuit board includes a vehicle power supply connector, a communication circuit, and a SIM card connector that is electrically connectable with a SIM card. The cover and the internal battery power supply part are integrated with each other.

In this structure, when the cover is opened with respect to the case, the internal battery power supply is disconnected. The SIM card in the case can be removed only after this opening operation of the cover. Therefore, the SIM card is removed only after the internal battery power supply is disconnected. That is, since the SIM card cannot be removed in the state where the internal battery power supply is connected, it is less likely that the position information will not be notified in the event of theft of the vehicle or the vehicle position information notification apparatus.

Further, in the vehicle position information notification apparatus of the first aspect, the cover includes a SIM card holder to fix the SIM card, and a slit portion having a slit that allows the SIM card holder to slide by a predetermined distance while holding the SIM card holder. In this way, it is configured that the SIM card holder can slide relative to the slit portion. Therefore, when the cover is removed, a state where the internal battery power supply is disconnected and the SIM card is connected to the SIM card connector is surely made. Therefore, it is less likely that the position information will not be notified in the event of theft of the vehicle or the vehicle position information notification apparatus.

### BRIEF DESCRIPTION OF DRAWINGS

The above and other objects, features and advantages of the present disclosure will become more apparent from the following detailed description made with reference to the accompanying drawings, in which:
Fig. 1 is a diagram illustrating a schematic structure of a vehicle position information notification system including a vehicle position information notification apparatus according to an embodiment of the present disclosure;
Fig. 2 is a diagram illustrating an exploded perspective view of a body of the vehicle position information notification apparatus according to the embodiment of the present disclosure;
Fig. 3 is a diagram illustrating an exploded perspective view of the body of the vehicle position information notification apparatus vertically inversed relative to the view of Fig. 2;
Fig. 4 is a diagram illustrating an exploded perspective view of a cover of the body of the vehicle position information notification apparatus of the present disclosure;
Fig. 5 is a diagram illustrating a plan view of a SIM card and the cover of the vehicle position information notification apparatus of the present disclosure;
Fig. 6 is a diagram illustrating a plan view of the cover when being attached to a case of the body of the vehicle position information notification apparatus of the present disclosure;
Fig. 7 is a diagram illustrating a cross-sectional view taken along a line VII-VII in Fig. 6;
Fig. 8 is a diagram illustrating a cross-sectional view taken along a line VIII-VIII in Fig. 6;
Fig. 9 is a diagram illustrating a plan view of a process of removing the cover from the case;
Fig. 10 is a diagram illustrating a cross-sectional view taken along a line X-X in Fig. 9;
Fig. 11 is a diagram illustrating a cross-sectional view taken along a line XI-XI in Fig. 9; and
Fig. 12 is a diagram illustrating a plan view of the cover before being attached to the case.

### DESCRIPTION OF EMBODIMENTS

Hereinafter, embodiments of the present disclosure will be described in detail with reference to the drawings. Portions that are substantially the same in the embodiments are designated with the same reference numbers, and descriptions thereof will be omitted.

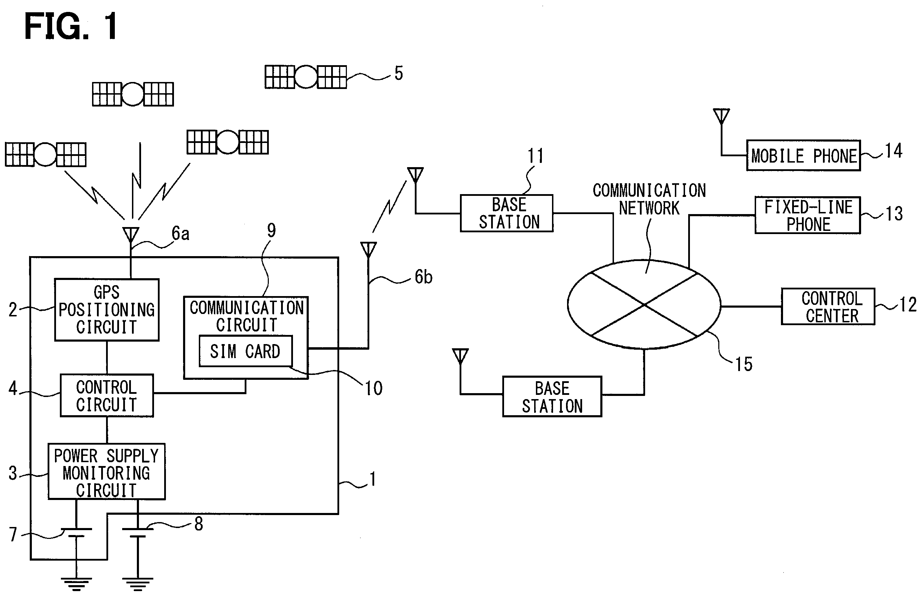

Fig. 1 is a schematic diagram illustrating an entire structure of a vehicle position information notification apparatus according to the embodiment of the present disclosure and a vehicle position information notification system including the vehicle position information notification apparatus. For example, the vehicle position information notification apparatus 1 of the present embodiment is equipped to a vehicle (not shown) such as a motorcycle.

As shown in Fig. 1, the vehicle position information notification apparatus 1 includes a GPS (Global Positioning System) positioning circuit 2, a power supply monitoring circuit 3, a control circuit 4, a communication circuit 9, and a SIM card (communication card) 10. The GPS positioning circuit 2 receives a positioning signal outputted from a GPS satellite 5 through an antenna 6a, and calculates a position information by computing the positioning signal. Further, the GPS positioning circuit 2 outputs the position information to the control circuit 4.

The power supply monitoring circuit 3 monitors connection states of an internal battery power supply 7 and a vehicle power supply 8, and outputs a connection information to the control circuit 4. The power supply monitoring circuit 3 switches the internal battery power supply 7 and the vehicle power supply 8 according to a command from the control circuit 4. For example, removal of the power supply can be detected based on the changes in potential of the internal battery power supply 7 and the vehicle power supply 8, and the connection information can be obtained. When the vehicle position information notification apparatus 1 is fixed to the vehicle, the vehicle power supply 8 is connected to the vehicle position information notification apparatus 1. When the vehicle position information notification apparatus 1 is removed from the vehicle, the connection with the vehicle power supply 8 is released.

The control circuit 4 controls a communication circuit 9 based on information provided from the GPS positioning circuit 2 and the power supply monitoring circuit 3 to conduct communication with a base station 11 through an antenna 6b. The communication circuit 9 is equipped with a SIM card (Subscriber Identity Module Card) 10 storing a phone number and other identification information. The base station 11, a control center 12, a fixed-line phone 13, and a mobile phone 14 are connected to a communication network 15. When the SIM card 10 is not equipped to the vehicle position information notification apparatus 1, the vehicle position information notification apparatus 1 is not identified and the communication with the base station 11 is invalid.

The vehicle position information notification apparatus 1 operates in the following manner in the event of theft. The power supply monitoring circuit 3 detects disconnection of one of the internal battery power supply 7 and the vehicle power supply 8, and outputs information indicating this detection to the control circuit 4. For example, in a case where the vehicle power supply 8 is disconnected, the power supply monitoring circuit 3 detects the disconnection of the vehicle power supply 8, and transmits the information indicating this disconnection to the control circuit 4. The control circuit 4 controls the power supply monitoring circuit 3 to switch a drive power supply from the vehicle power supply 8 to the internal battery power supply 7, based on power supply connection information transmitted from the power supply monitoring circuit 3. Also, the control circuit 4 controls the communication circuit 9 to transmit the position information to the base station 11. The base station 11 transmits the position information received from the vehicle position information notification apparatus 1 to the control center 12 through the communication network 15. The control center 12 transmits, based on a predetermined setting, information indicating that there is a possibility that the vehicle or the vehicle position information notification apparatus 1 has been stolen and the position information to the fixed-line phone 13 or the mobile terminal 14 (mobile phone or smart phone) of an owner of the vehicle, a terminal of a security company (not shown), a terminal of a police station (not shown), or the like.

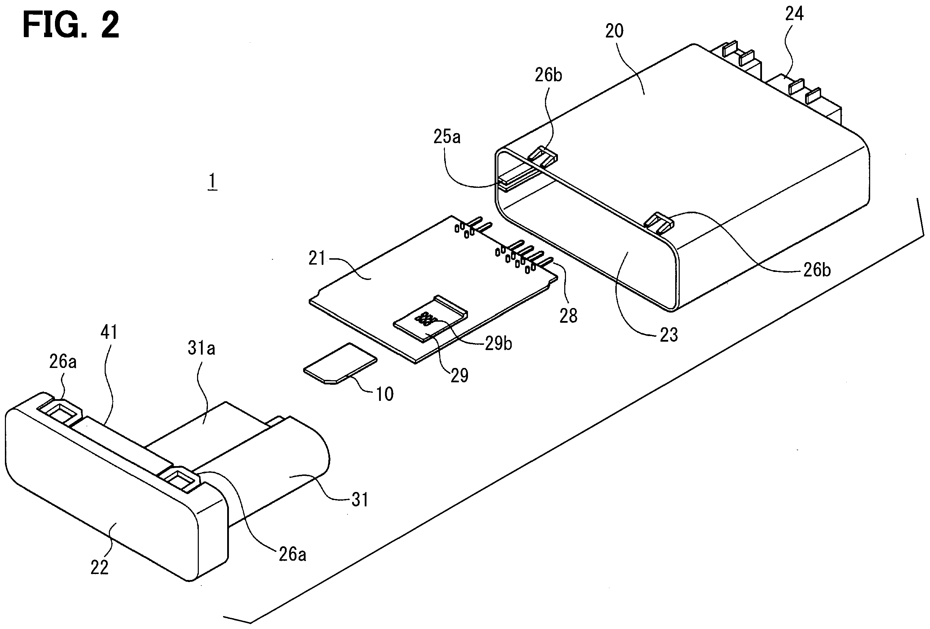

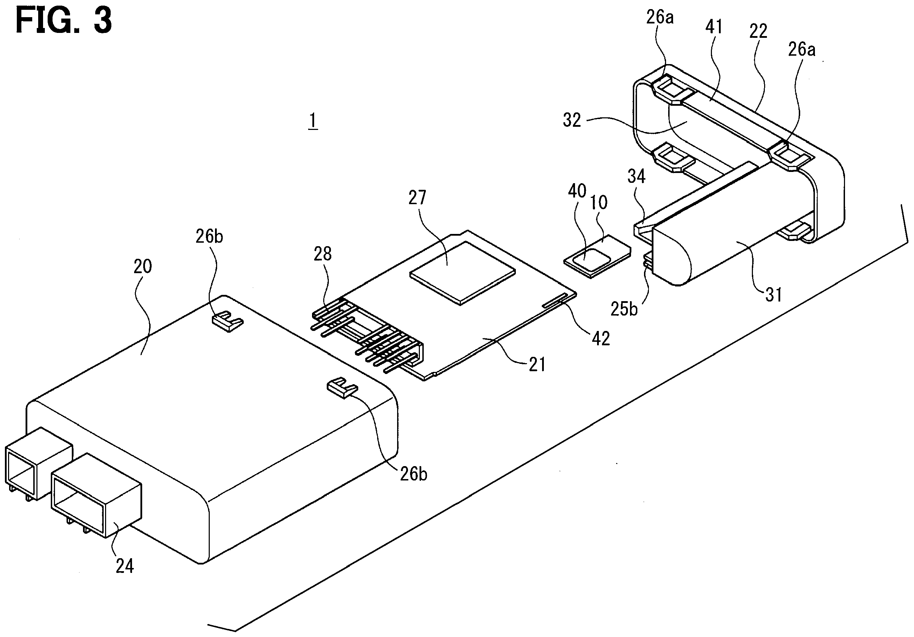

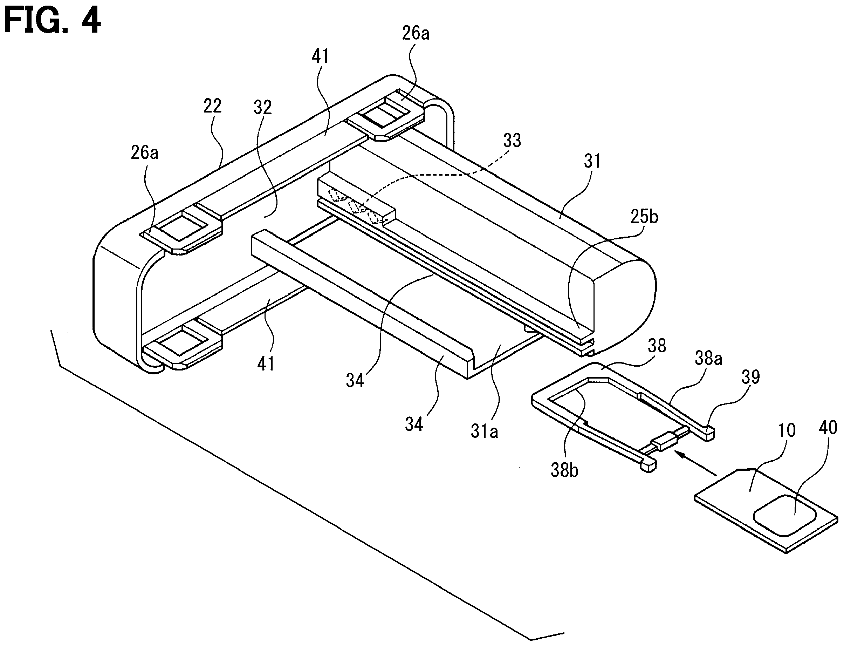

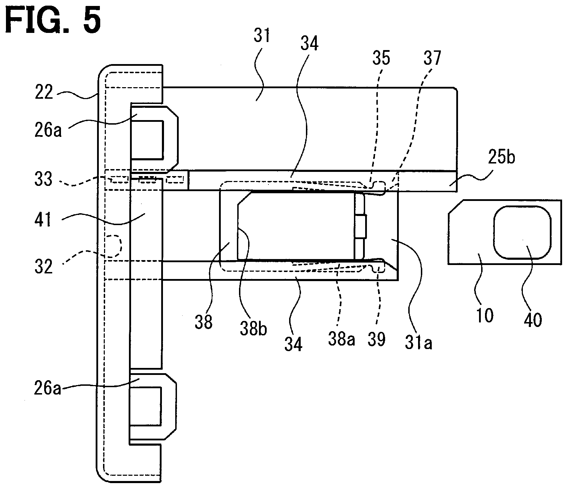

Fig. 2 and Fig. 3 are diagrams illustrating exploded perspective views of a body of the vehicle position information notification apparatus 1 of the embodiment of the present embodiment. Fig. 3 is the diagram illustrating the inversed view of Fig. 2. Fig. 4 is a diagram illustrating a perspective view of a cover 22 of the body of the vehicle position information notification apparatus 1 in detail. Fig. 5 is a diagram illustrating a plan view of the cover 22 when viewed from the top, in a state where the SIM card 10 is removed.

The vehicle position information notification apparatus 1 includes a case (body case) 20, a circuit board 21, and a cover (body cover) 22. The case 20 has a hollow rectangular parallelepiped shape. The case 20 has an opening portion 23 on one side, and the opening portion 23 can be covered with the cover 22. The case 20 has an opening portion 24 on an opposite side of the opening portion 23 for a vehicle power supply connector 28. As shown in Fig. 2, the case 20 has a first substrate receiving portion 25a with a slit shape on an inner side surface for holding an end portion of the circuit board 21. The case 20 further has engagement portions 26b outside of the opening portion 23. The engagement portions 26b detachably engage with engagement portions 26a of the cover 22 to fix the cover 22 to the case 20.

The circuit board 21 includes an IC chip 27, the vehicle power supply connector 28, and a SIM card connector 29. The IC chip 27 includes the GPS positioning circuit 2, the power supply monitoring circuit 3, the control circuit 4, and the communication circuit 9. The circuit board 21 is inserted into the case 20 while being held by the first substrate receiving portion 25a and a second substrate receiving portion 25b (described later) provided inside of the case 20, and is fixed in the case 20. The second substrate receiving portion 25b has a slit shape.

The vehicle power supply connector 28 is fixed to the circuit board 21. When the circuit board 21 is inserted into the case 20 from the opening portion 23, the vehicle power supply connector 28 project outside of the case 20 from the opening portion 24 on the opposite side of the opening portion 23, and is connectable with the in-vehicle power supply 8 or a vehicle control device (not shown).

The cover 22 integrally has an internal battery power supply part 31 constituting the internal battery power supply 7. The internal battery power supply part 31 has a substantially cylindrical shape. The internal battery power supply part 31 is integrally formed with the cover 22 to extend from an inner wall surface of the cover 22 toward the case 20. For example, the internal battery power supply part 31 has a lithium ion cell therein.

The internal battery power supply part 31 has the second substrate receiving portion 25b on a side surface. The second substrate receiving portion 25b has a slit shape to hold an opposite end portion of the circuit board 21, and extends in a longitudinal direction of the internal battery power supply part 31. The internal battery power supply part 31 includes a spring contact (contact of the internal battery power supply part) adjacent to an inner end wall 32 of the cover 22 for electrically connecting the internal battery power supply part 31 to the circuit board 21 (see Fig. 4).

The internal battery power supply part 31 is formed with a plate-shaped holder receiving portion 31 a. The holder receiving portion 31 a is formed with slit portions 34 at both side ends thereof. The slit portions 34 have slits for holding and sliding a SIM card holder 38 in a longitudinal direction of the internal battery power supply part 31. Each of the slit portions 34 has an engagement projection 35 and a slit end 37 having a shape of projection, as shown in Fig. 5. The SIM card holder 38 is held in the holder receiving portion 31 a in a state of being inserted in the slit portions 34 and held from both sides. The SIM card holder 38 is slidable in a predetermined distance between the slit ends 37 of the slit portions 34 and the inner end wall 32.

The SIM card holder 38 has spring arm portions 38a at opposite ends thereof. Each of the spring arm portions 38a has a stopper portion 39 at an end. The stopper portion 39 is elastically pressed against the slit portion 34 by means of the spring arm portion 38a. The stopper portions 39 engage with the engagement projections 35 of the slit portions 34 and restrict the SIM card holder 38 from oscillating between the slit portions 34 in a state where the cover 22 is removed from the opening portion 23 of the case 20.

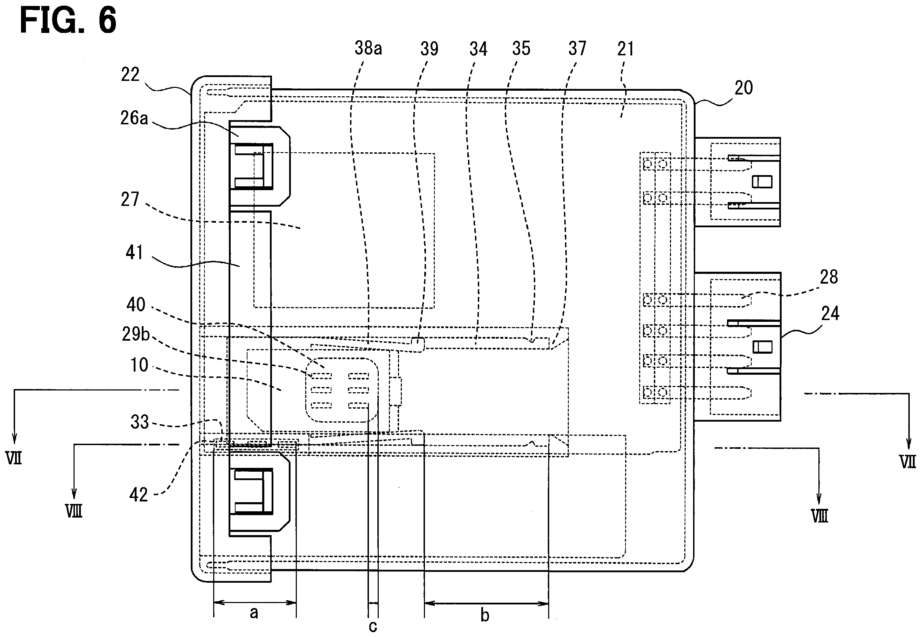

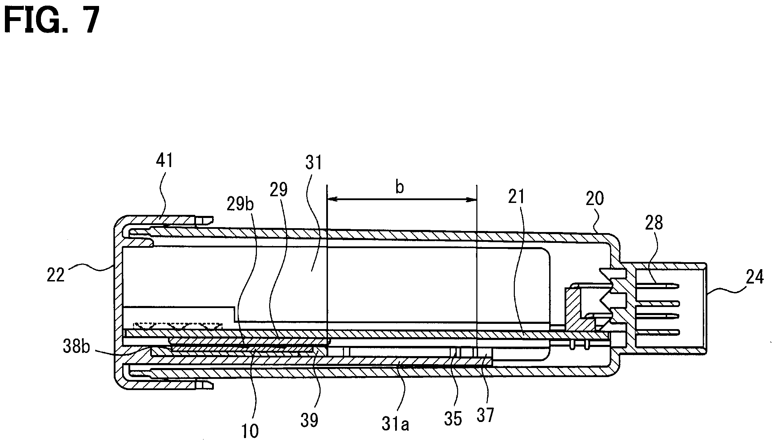

The SIM card holder 38 is formed with a shallow accommodation recess 38b on its top surface for arranging the SIM card 10 thereon (see Figs. 4, 5 and 7). The SIM card 10 is arranged on the accommodation recess 38b in such a manner that a surface electrode 40 exposes. The cover 22 has a projecting portion (eaves portion) 41 that extends in an insertion and removal direction of the cover 22 relative to the case 20 and has a skirt shape to engage with an inner surface or an outer surface of the case 20. The cover 22 also has engagement portions 26a. The insertion and removal direction corresponds to a right and left direction in Fig. 6. For example, the insertion and removal direction corresponds to a direction perpendicular to a planar direction of the cover. The internal battery power supply part 31 and the slit portion 34 extend in the insertion and removal direction.

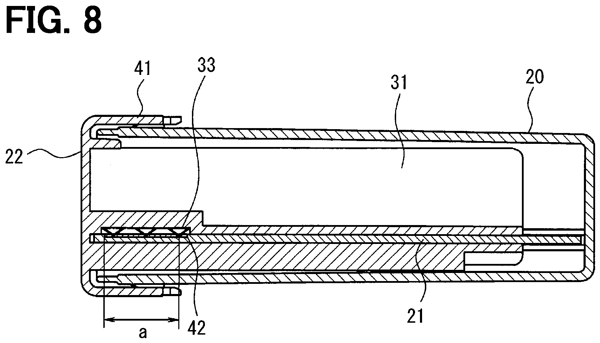

Figs. 6 to 8 illustrates the state in which the circuit board 21 is inserted in the case 20, the SIM card 10 is installed in the SIM card holder 38, and the opening portion 23 is covered with the cover 22. In this state, a SIM connector contact 29b (see Figs. 2, 6 and 7) on the surface of the SIM card connector 29 that is tightly fixed to the circuit board 21 is in contact with the surface electrode 40 of the SIM card 10 to establish electric conduction. A length b indicates a distance that the SIM card holder 38 can slide in the slit portions 34. The length b corresponds to a length that is obtained by subtracting the length of the SIM card holder 38 from the length of the slit portion 34. A length c (see Fig. 6) indicates a length of an area where the SIM connector contact 29b and the surface electrode 40 of the SIM card 10 can contact with each other during the insertion or removal of the cover 22.

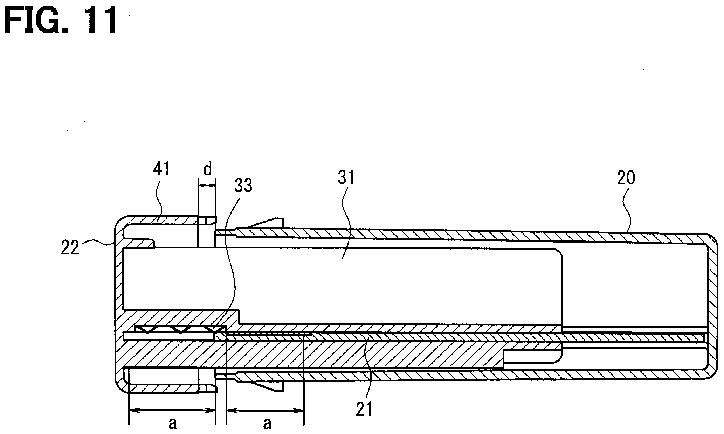

The circuit board 21 has a board contact 42 (see Figs. 3, 6 and 8) formed as lands for the internal battery power supply 7. When the spring contact 33 contacts with the board contact 42, electrical connection between the internal battery power supply part 31 and the circuit board 21 is established. A length a (see Figs. 6, 8, 9 and 11) indicates a length that the board contact 42 and the spring contact 33 can contact with each other during the insertion or removal of the cover 22. In other words, the length a is equal to a movement distance of the cover 22 from the beginning of the removal of the cover 22 from the case 20 until the contact between the board contact 42 and the spring contact 33 is released, that is, until the electrical connection is disconnected. In this state, the stopper portion 39 of each spring arm portion 38a of the SIM card holder 38 is elastically in contact with the slit portion 34. However, the contact frictional force of the stopper portion 39 relative to the slit portion 34 is smaller than the contact frictional force between the SIM connector contact 29b and the surface electrode 40.

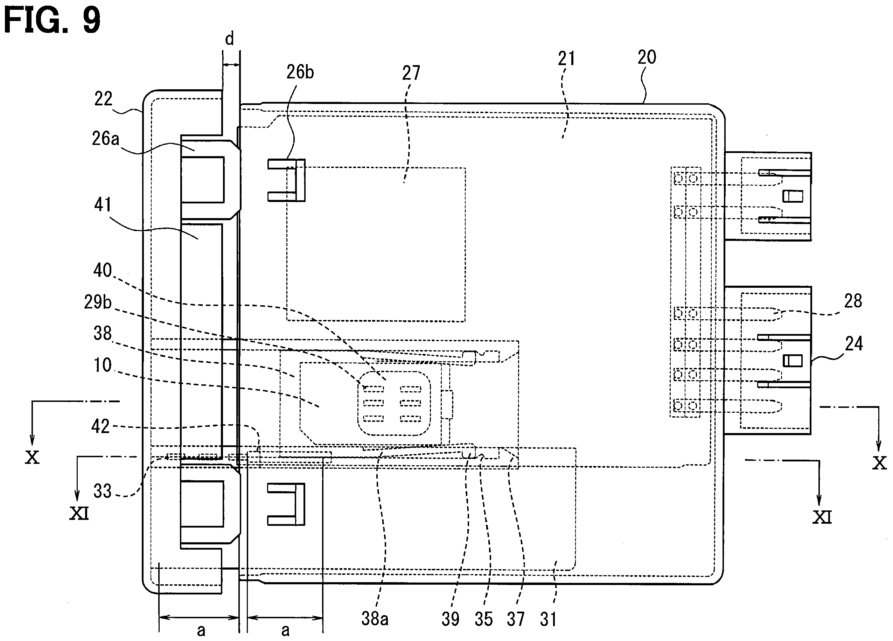

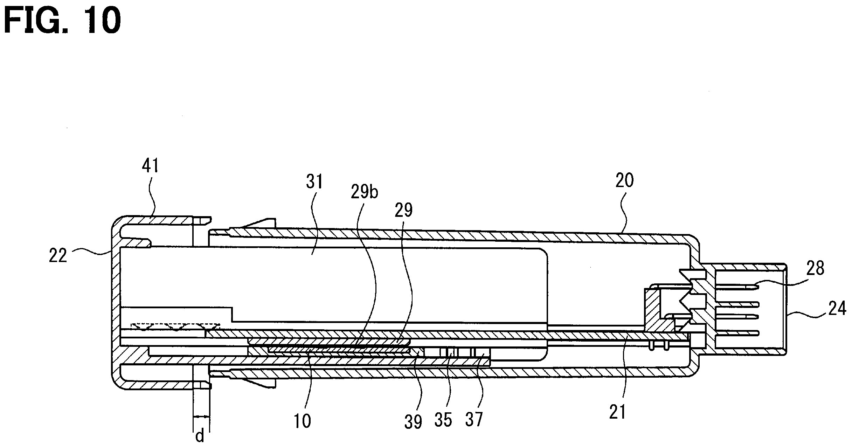

Figs. 9 to 11 illustrate the state where the cover 22 has been pulled out from the case 20 only by the distance of the length a from the beginning of the removal and of a point where the electrical connection between the board contact 42 for the internal battery and the spring contact 33 is disconnected. As described above, the contact frictional force of each stopper portion 39 relative to the corresponding slit portion 34 is smaller than the contact frictional force between the SIM connector contact 29b and the surface electrode 40. Therefore, even when the holder receiving portion 31 a, which is integral with the cover 22, is moved in the removal direction, the SIM card holder 38 and the SIM card 10 stay at the original position (the position in Fig. 6) and the electrical connection between the SIM connector contact 29b and the surface electrode 40 of the SIM card 10 is maintained. In this time, although the electrical connection of the internal battery power supply 7 is disconnected, the SIM card 10 is connected to the circuit board 21. Therefore, the vehicle position information notification apparatus 1 is driven by the vehicle power supply 8, and can notify the position information.

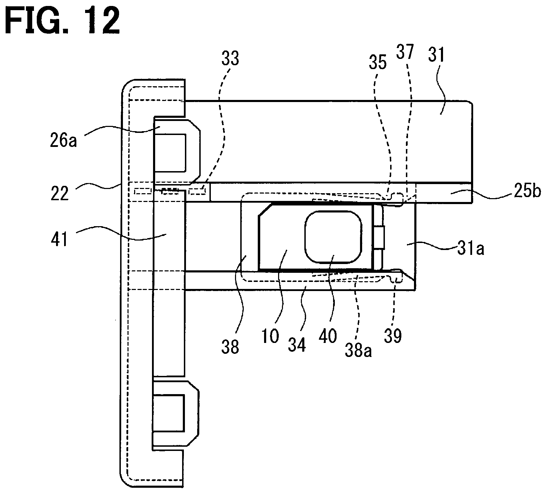

Next, an operation to remove the cover 22 from the state where the cover 22 covers the case 20 (from the state shown in Figs. 6 to 8) will be described. Note that, in the following descriptions, the vehicle position information notification apparatus 1 is fixed to the vehicle, and is connected with the vehicle power supply 8.
(Section A) When the removal of the cover 22 begins from the state that the cover 22 is covering the opening portion 23 of the case 20 (the state shown in Figs. 6 to 8), the cover 22 moves by the distance of the length a where the board contact 42 and the spring contact 33 can contact with each other and be rubbed with each other, and then the electrical connection between the board contact 42 and the spring contact 33 is disconnected (the state shown in Figs. 9 to 11). On the other hand, during this period, only the slit portions 34 and the holder receiving portion 31 a are pulled integrally with the cover 22 from the inside of the case 20 in the state where the SIM card holder 38 stays at the original position and does not shift relative to the SIM card connector 29 (that is, in the state where the contact between the SIM connector contact 29b and the surface electrode 40 of the SIM card 10 is not relatively moved and the electrical connection is kept). In this case, the contact frictional force between the stopper portion 39 of each of the spring arm portions 38a of the SIM card holder 38 and the slit portion 34 is smaller than the contact frictional force between the SIM connector contact 29b and the surface electrode 40. Therefore, when the cover 22 is removed, the movement is made in the manner described above.
(Section B) A force that the stopper portion 39 moves over the engagement projection 35 is smaller than the contact frictional force between the SIM connector contact 29b and the surface electrode 40. Therefore, when the cover 22 is further pulled out, the stopper portion 39 moves over the engagement projection 35 and the slit end 37 of the slit portion 34 is brought into contact with the stopper portion 39 of the SIM card holder 38 (the state shown in Fig. 12). During this period, only the slit portion 34 and the holder receiving portion 31 a move integrally with the cover 22 in the pulling-out direction in the state where the SIM card holder 38 stays at the original position, that is, the electrical connection between the surface electrode 40 of the SIM card 10 and the SIM connector contact 29b is kept. The cover 22 has moved by the distance of the length b from the beginning of the removal.
(Section C) When the slit end 37 contacts with the stopper portion 39, the SIM card holder 38 directly receives the force of pulling out the cover 22. Therefore, the SIM card holder 38 is removed integrally with the cover 22. With this, the SIM card 10 installed in the SIM card holder 38 moves by the length c, which is the contactable length where the SIM connector contact 29b and the surface electrode 40 can contact with each other while being rubbed with each other. Thereafter, the SIM connector contact 29b and the surface electrode 40 are separated from each other, and the electrical connection between the circuit board 21 and the SIM card 10 is disconnected. During this period, the cover 22 moves by the distance of b + c from the beginning of the removal. The case 20 and the cover 22 are separated from each other at this point.

In the section B and the section C, the power supply of the internal battery power supply 7 has been already shut off, but the SIM card 10 and the circuit board 21 are electrically connected to each other. In these sections, the vehicle position information notification apparatus 1 is driven by the vehicle power supply 8. Therefore, the vehicle position information notification apparatus 1 can transmit an emergency notification based on the disconnection of the internal battery power supply 7 at the end point of the section A.

In the sections A to B, to pull only the slit portion 34 and the holder receiving portion 31 a integrally with the cover 22 while keeping the state where the SIM card holder 38 does not shift relative to the SIM card connector 29 (the state where the contact between the SIM connector contact 29b and the surface electrode 40 is held), it is necessary that the contact frictional force between the stopper portion 39 of each of the spring arm portions 38a of the SIM card holder 38 and the slit portion 34 is smaller than the contact frictional force between the SIM connector contact 29b and the surface electrode 40.

In the sections B to C, to realize the state where the power supply of the internal battery power supply 7 is shut off, but the SIM card 10 and the circuit board 21 are electrically connected to each other, it is necessary that the lengths a, b, and c satisfy the relation of b + c > a. The state described above is further suitably realized when the relation of b > a is satisfied.

As described above, the cover 22 integrally has the internal battery power supply part 31. In this structure, when the cover 22 is operated to open the case 20, the internal battery power supply 7 is disconnected. The removal of the SIM card 10 within the case 20 is not allowed without this opening. Therefore, on removing the SIM card 10, the SIM card 10 can be removed only after the internal battery power supply 7 is disconnected. That is, the SIM card 10 cannot be removed in the state where the internal battery power supply 7 is connected. Therefore, it is less likely that the position information will not be notified in the event of a theft of the vehicle or the vehicle position information notification apparatus 1.

By the sliding structure described above, the state where the internal battery power supply 7 has been disconnected, but the SIM card 10 is in the connected state can be surely made when the cover 22 is removed. Therefore, it is less likely that the position information will not be notified in the event of a theft of the vehicle or the vehicle position information notification apparatus 1.

Next, the projecting portion 41 provided in the cover 22 and having the skirt shape will be described. As described above, the vehicle position information notification apparatus 1 performs the emergency notification when either the internal battery power supply 7 or the vehicle power supply 8 is disconnected. In other words, when the SIM card 10 is removed in the state where both of the internal battery power supply 7 and the vehicle power supply 8 are in the connection states, the emergency notification described above is not made and the wireless communication cannot be performed. Therefore, during the section A, if the SIM card 10 can be removed by inserting a finger or a jig between the cover 22 and the case 20, there is a possibility that the emergency notification cannot be made in the event of theft of the vehicle position information notification apparatus 1. In the present embodiment, therefore, as shown in Figs. 2 to 12, the projecting portion 41 extending toward the case in the insertion and removal direction of the cover 22, for example, toward the inside of the case and having a skirt shape is provided to prohibit the finger or the jig from being inserted inside of the case 20. A clearance d between the projecting portion 41 and the case 20 may be at least equal to or less than a thickness of the finger or the jig. The clearance d may be eliminated by increasing the length of the projecting portion 41. For example, the projecting length of the projecting portion 41 may be equal to or greater than the contact distance between the board contact 42 and the spring contact 33.

Therefore, an act of inserting the finger or the jig through the clearance during the removal of the cover 22 to disconnect the connection of the SIM card 10 and to steal the SIM card 10 can be restricted. Accordingly, the SIM card 10 cannot be disconnected or removed when both of the vehicle power supply and the internal battery power supply are in the connected states, and it is less likely that the position information will not be notified in the event of a theft of the vehicle or the vehicle position information notification apparatus 1.

Next, an operation of the cover 22 during the insertion will be described. In Fig. 12, the stopper portion 39 is engaged with the engagement projection 35. When the cover 22 is inserted into the case 20 from this state, the end of the surface electrode 40 of the SIM card 10 is brought into contact with the SIM connector contact 29b. In this time, within the slit portions 34, the stopper portions 39 hit against the engagement projections 35. When the cover 22 is slightly pushed in, the surface electrode 40 of the SIM card 10 and the SIM connector contact 29b of the circuit board 21 are electrically connected to each other. After the cover 22 is further inserted, the stopper portions 39 are taken out from the engagement projections 35, but the SIM card holder 38 stays at that position, because the contact frictional force between the SIM connector contact 29b and the surface electrode 40 is greater than the force that the stopper portions 39 move over the engagement projections 35. Therefore, only the SIM card holder receiving portion 31 a and the slit portions 34 are moved in the insertion direction in accordance with the insertion of the cover 22, and the contact between the SIM connector contact 29b and the surface electrode 40 is maintained.

When the cover 22 is further pushed in, the spring contact 33 contacts with the internal battery board contact 42 on the circuit board 21 and is electrically connected as being further pushed in. Thereafter, the end of the SIM card holder 38 adjacent to the cover 22 is hit against the inner end wall 32 of the slit portions 34 of the cover 22, the pushing force is loaded on the SIM card holder 38. Therefore, the SIM connector contact 29b is securely pushed into about a middle portion of the surface electrode 40, and the SIM connector contact 29b is sufficiently connected to the surface electrode 40. Further, the engagement portions 36a of the cover 22 are engaged with the engagement portions 36b of the case 20, and the case 20 is closed with the cover 22.

As described above, by employing the structure of the present embodiment, the SIM card 10, the internal battery power supply 7 and the cover 22 can be inserted or removed by one action in the insertion or the removal, and further a working efficiency improves. When the cover 22 is inserted, the internal battery power supply 7 is connected after the SIM card 10 and the circuit board 21 are connected to each other, and hence the communication becomes surely possible.

### (Other embodiments)

The preferred embodiments of the present disclosure are described hereinabove. However, the present disclosure is not limited to the embodiments described hereinabove, but may be modified or expanded in various ways without departing from the gist of the disclosure.

The vehicle position information notification apparatus of the present disclosure may be equipped not only to the four-wheeled vehicles or motorcycles, but also to any vehicles (electric vehicles) or any other transferring means.

The internal battery power supply may be provided by rechargeable batteries, such as a lead accumulator and a lithium ion battery, or an electric double layer capacitor.

## Claims

1. A vehicle position information notification apparatus (1), which can be installed in a vehicle and transmits a position information measured via a wireless communication when an electrical connection of either a vehicle power supply or an internal battery power supply is disconnected, comprising:
a case (20) having an opening portion (23);
a circuit board (21) being disposed in the case (20), and including a vehicle power supply connector (28), a communication circuit (9), and a SIM card connector (29) electrically connectable with a SIM card (10);
a cover (22) covering the opening portion (23) of the case; and
an internal battery power supply part (31) constituting the internal battery power supply, the vehicle position information notification apparatus being **characterized in that**
the cover (22) and the internal battery power supply part (31) are integrated with each other, and
the cover (22) includes a SIM card holder (38) in which the SIM card (10) can be installed, and a slit portion (34) having a slit that allows the SIM card holder (38) to slide by a predetermined distance while holding the SIM card holder (38).

2. The vehicle position information notification apparatus according to claim 1, **characterized in that**
a frictional force between the SIM card holder (38) and the slit portion (34) is smaller than a frictional force between the SIM card connector (29) and a surface electrode (40) of the SIM card.

3. The vehicle position information notification apparatus according to claim 1 or 2, **characterized in that**
the predetermined distance that the SIM card holder (38) is allowed to slide is equal to or greater than a contact distance where a contact (42) on the circuit board and a contact (33) of the internal battery power supply part (31) can contact with each other.

4. The vehicle position information notification apparatus according to any one of claims 1 to 3, **characterized in that**
a sum of the predetermined distance that the SIM card holder (38) is allowed to slide and a contact distance where the SIM card connector (29) and the surface electrode (40) of the SIM card can contact with each other is equal to or greater than a contact distance where a contact (42) on the circuit board and a contact (33) of the internal battery power supply part (31) can contact with each other.

5. The vehicle position information notification apparatus according to any one of claims 1 to 4, characterize in that
the cover (22) has a projecting portion (41) projecting toward the case (20) in a skirt shape, and
a projecting length of the projecting portion (41) is equal to or greater than a contact distance where a contact (42) on the circuit board and a contact (33) of the internal battery power supply part (31) can contact with each other.

## Patentansprüche

1. Fahrzeugpositionsinformationsbenachrichtigungsvorrichtung (1), die in einem Fahrzeug installiert werden kann und Positionsinformationen, die mittels drahtloser Kommunikation gemessen werden, überträgt, wenn eine elektrische Verbindung entweder einer Fahrzeugenergieversorgung oder einer internen Batterieenergieversorgung unterbrochen wird, wobei die Vorrichtung aufweist:
ein Gehäuse (20), das einen Öffnungsabschnitt (23) aufweist;
eine Leiterplatte (21), die in dem Gehäuse (20) angeordnet ist und einen Fahrzeugenergieversorgungsverbinder (28), eine Kommunikationsschaltung (9) und einen SIM-Kartenverbinder (29), der mit einer SIM-Karte (10) elektrisch verbindbar ist, enthält;
einen Deckel (22), der den Öffnungsabschnitt (23) des Gehäuses bedeckt; und
einen internen Batterieenergieversorgungsteil (31), der die interne Batterieenergieversorgung ausbildet, wobei die Fahrzeugpositionsinformationsbenachrichtigungsvorrichtung **dadurch gekennzeichnet ist, dass**
der Deckel (22) und der interne Batterieenergieversorgungsteil (31) miteinander integriert sind, und
der Deckel (22) einen SIM-Kartenhalter (38), in dem die SIM-Karte (10) installiert werden kann, und einen Schlitzabschnitt (34) enthält, der einen Schlitz aufweist, der es dem SIM-Kartenhalter (38) ermöglicht, um eine vorbestimmte Strecke zu gleiten, während der SIM-Kartenhalter (38) gehalten wird.

2. Fahrzeugpositionsinformationsbenachrichtigungsvorrichtung nach Anspruch 1, **dadurch gekennzeichnet, dass**
eine Reibungskraft zwischen dem SIM-Kartenhalter (38) und dem Schlitzabschnitt (34) kleiner als eine Reibungskraft zwischen dem SIM-Kartenverbinder (29) und einer Oberflächenelektrode (40) der SIM-Karte ist.

3. Fahrzeugpositionsinformationsbenachrichtigungsvorrichtung nach Anspruch 1 oder 2, **dadurch gekennzeichnet, dass**
die vorbestimmte Strecke, die der SIM-Kartenhalter (38) gleiten kann, gleich oder größer als eine Kontaktstrecke ist, bei der ein Kontakt (42) auf der Leiterplatte und ein Kontakt (33) des internen Batterieenergieversorgungsteils (31) einander kontaktieren können.

4. Fahrzeugpositionsinformationsbenachrichtigungsvorrichtung nach einem der Ansprüche 1 bis 3, **dadurch gekennzeichnet, dass**
eine Summe aus der vorbestimmten Strecke, die der SIM-Kartenhalter (38) gleiten kann, und einer Kontaktstrecke, bei der der SIM-Kartenverbinder (29) und die Oberflächenelektrode (40) der SIM-Karte einander kontaktieren können, gleich oder größer als eine Kontaktstrecke ist, bei der ein Kontakt (42) auf der Leiterplatte und ein Kontakt (33) des internen Batterieversorgungsteils (31) einander kontaktieren können.

5. Fahrzeugpositionsinformationsbenachrichtigungsvorrichtung nach einem der Ansprüche 1 bis 4, **dadurch gekennzeichnet, dass**
der Deckel (22) einen vorstehenden Abschnitt (41) aufweist, der in Richtung des Gehäuses (20) in einer Rockgestalt vorsteht, und
eine vorstehende Länge des vorstehenden Abschnitts (41) gleich oder größer als eine Kontaktstrecke ist, bei der ein Kontakt (42) auf der Leiterplatte und ein Kontakt (33) des internen Batterieenergieversorgungsteils (31) einander kontaktieren können.

## Revendications

1. Appareil de notification d'informations sur la position d'un véhicule (1), qui peut être installé dans un véhicule et transmet des informations de position mesurées via une communication sans fil lorsqu'une connexion électrique de l'une ou l'autre d'une alimentation de véhicule ou d'une alimentation par batterie interne est déconnectée, comprenant :
un boîtier (20) ayant une partie d'ouverture (23) ;
une carte de circuit imprimé (21) disposée dans le boîtier (20), et comportant un connecteur d'alimentation de véhicule (28), un circuit de communication (9) et un connecteur de carte SIM (29) connectable électriquement avec une carte SIM (10) ;
un couvercle (22) couvrant la partie d'ouverture (23) du boîtier ; et
un élément d'alimentation par batterie interne (31) constituant l'alimentation par batterie interne, l'appareil de notification d'informations sur la position d'un véhicule étant **caractérisé en ce que**
le couvercle (22) et l'élément d'alimentation par batterie interne (31) sont intégrés l'un à l'autre, et
le couvercle (22) comporte un support de carte SIM (38) dans lequel la carte SIM (10) peut être installée, et une partie formant fente (34) ayant une fente qui permet au support de carte SIM (38) de coulisser d'une distance prédéterminée tout en supportant le support de carte SIM (38).

2. Appareil de notification d'informations sur la position d'un véhicule selon la revendication 1, **caractérisé en ce que**
une force de frottement entre le support de carte SIM (38) et la partie formant fente (34) est inférieure à une force de frottement entre le connecteur de carte SIM (29) et une électrode de surface (40) de la carte SIM.

3. Appareil de notification d'informations sur la position d'un véhicule selon la revendication 1 ou 2, **caractérisé en ce que**
la distance prédéterminée de laquelle le support de carte SIM (38) est autorisé à coulisser est supérieure ou égale à une distance de contact à laquelle un contact (42) sur la carte de circuit imprimé et un contact (33) de l'élément d'alimentation par batterie interne (31) peuvent être en contact l'un avec l'autre.

4. Appareil de notification d'informations sur la position d'un véhicule selon l'une quelconque des revendications 1 à 3, **caractérisé en ce que**
une somme de la distance prédéterminée de laquelle le support de carte SIM (38) est autorisé à coulisser et d'une distance de contact à laquelle le connecteur de carte SIM (29) et l'électrode de surface (40) de la carte SIM peuvent entrer en contact l'un avec l'autre est supérieure ou égale à une distance de contact à laquelle un contact (42) sur la carte de circuit imprimé et un contact (33) de l'élément d'alimentation par batterie interne (31) peuvent être en contact l'un avec l'autre.

5. Appareil de notification d'informations sur la position d'un véhicule selon l'une quelconque des revendications 1 à 4, **caractérisé en ce que**
le couvercle (22) présente une partie en saillie (41) faisant saillie vers le boîtier (20) sous la forme d'une jupe, et
une longueur de saillie de la partie en saillie (41) est supérieure ou égale à une distance de contact à laquelle un contact (42) sur la carte de circuit imprimé et un contact (33) de l'élément d'alimentation par batterie interne (31) peuvent entrer en contact l'un avec l'autre.
